# EUROPEAN PATENT APPLICATION

(11) **EP 4 822 175 A1**
(43) Date of publication of application: **14.10.2026**
(21) Application number: 25382372.8
(22) Date of filing: 10.04.2025
(51) Int. Cl.: F03D 80/50

(54) **DISPLACEMENT APPARATUS**

(71) Applicant: Siemens Gamesa Renewable Energy Innovation & Technology S.L., 31621 Sarriguren (Navarra) (ES)
(72) Inventor: Uriarte Mijangos, Gorka, 48150 Sondika (ES); Gomez Santamaria, David, 48010 Bilbao (ES); Arribas Arribas, David, 42004 Soria (ES); Orue Badiola, Paul, 48360 Mundaka (ES)
(74) Representative: SGRE-Association

(57) **Abstract**

The invention describes an apparatus (1) for moving a wind turbine gearbox (24) along a bedplate (22) of a wind turbine installation (2), comprising a pair of torque arm supports (10L, 10R), wherein each torque arm support (10L, 10R) is adapted for connection to the bedplate (22) and for installation about a torque arm (24L, 24R) of the gearbox (24); and a means (11) of effecting a displacement (Δ24) of the gearbox (24) relative to the torque arm supports (10L, 10R). The invention further describes a method of moving a wind turbine gearbox (24) along a bedplate (22) of a wind turbine installation (2), which method comprises providing such an apparatus (1) and actuating the displacement means (11) to effect a displacement (Δ24) of the gearbox (24) along the bedplate (22).

## Description

### Background

In a well-known wind turbine configuration, the drivetrain of the wind turbine comprises a low-speed shaft turned by the aerodynamic rotor, a gearbox and a generator. The gearbox can be a multistage planetary gearbox, and the generator can be coaxially mounted to the gearbox. The weight of the gearbox can be carried by the low-speed shaft, which is coupled to the gearbox by means of a suitable low-speed coupling interface. A high-speed coupling interface can connect the high-speed output shaft of the gearbox to the generator. A nacelle bedplate supports the drivetrain, for example housings of the low-speed shaft and the generator can be mounted to the bedplate.

The non-drive end of the shaft is coupled in some way to the front of the gearbox so that the low-speed shaft can turn the gearbox first stage. It may become necessary at some time during the service life of the wind turbine to access the front of the gearbox and/or the non-drive end of the shaft. For example, it may be necessary to perform repair or maintenance on bearings, seals or other components in the coupling region. However, the coupling between shaft and gearbox is generally designed to be as compact as possible, primarily in order to minimize torque loss during operation of the wind turbine. The non-drive end of the low-speed shaft can be directly coupled to the gearbox first stage by any suitable low-depth coupling interface, for example a double-flange joint. Regardless of the chosen coupling design, it may be required to release the coupling (i.e. to detach the gearbox from the low-speed shaft) and to physically move the gearbox away from the low-speed shaft in order to perform a repair/maintenance procedure in the coupling region.

However, the weight of the gearbox can be in the order of 30 to 40 metric tonnes and cannot be lifted by the relatively small type of service crane that may be present in the nacelle. Therefore, while the service crane can be deployed to handle relatively small components such as the converter, tools, etc., a much larger crane would be required to move the gearbox away from the low-speed shaft. In such a prior art procedure, the nacelle roof is opened, the gearbox is attached to the crane's suspension hook, and the external crane is operated to lift the gearbox out of the nacelle. After completion of the maintenance procedure in the coupling region, the external crane is operated to lift the gearbox back into the nacelle. In the case of an offshore wind turbine installation, the heavy-duty crane must be transported to the offshore site by a jackup vessel, so that such maintenance procedures can be prohibitively expensive.

It is therefore an object of the invention to provide an alternative way of opening the coupling region of such a wind turbine installation.

This object is achieved by the claimed apparatus and by the claimed method of moving a wind turbine gearbox.

### Description

The inventive apparatus is intended for use in a task of the type described in the introduction, i.e. a task of moving the gearbox of a wind turbine away from the low-speed shaft to which it was connected, in order to open the coupling region. It shall be understood that the wind turbine drivetrain is supported by a bedplate, i.e. a robust steel structure which is generally mounted on top of the wind turbine tower and which is shaped to accommodate the drivetrain components.

It is usual to mount the rotary drivetrain components to the bedplate in such a way that loads are efficiently transferred via the bedplate to the tower. For example, the low-speed unit can be supported by a main bearing, arranged inside a housing which is mounted to the bedplate. Similarly, the gearbox can be contained in a housing that is mounted to the bedplate. The gearbox housing can be provided with diametrically opposed protrusions or "torque arms" which are secured to the bedplate and which can comprise load-absorbing elements such as elastomer dampers. In the context of the invention, it shall be understood that the gearbox is connected to the bedplate in this way, i.e. that each torque arm of the gearbox is secured to the bedplate by a robust assembly referred to herein as a torque arm fixation assembly.

To distinguish between the two torque arms in the following, a convention is used in which, from the point of view of a person standing in the nacelle and facing towards the front of the nacelle, the first torque arm is on the left-hand side (LHS) of the gearbox, and the second torque arm is on the right-hand side (RHS) of the gearbox. In keeping with a similar convention, the expression "upwind direction" shall be understood to mean "towards the front of the nacelle" and the expression "downwind direction" shall be understood to mean "towards the rear of the nacelle".

According to the invention, the apparatus comprises a pair of torque arm supports, each adapted for installation between the bedplate and a torque arm of the gearbox. A torque arm support shall be understood to fit about a torque arm after removal of the fixation assembly which otherwise connects the gearbox to the bedplate. A first torque arm support connects to the bedplate and fits about the LHS torque arm of the gearbox; a second torque arm support connects to the bedplate and fits about the RHS torque arm of the gearbox. The inventive apparatus further comprises a displacement means which can effect a linear displacement of the gearbox relative to the torque arm supports.

An advantage of the inventive apparatus is that the gearbox remains supported by the bedplate at all times, i.e. the gearbox cannot tilt as it might when lifted by crane. The inventive apparatus or "tooling" is able to move the gearbox backward (towards the rear of the nacelle) by a distance sufficient to afford a service technician access to the coupling region, and to move the gearbox forwards again to its original position once the maintenance procedure is complete. The inventive tooling therefore contributes significantly to a reduction in maintenance costs, since the gearbox can be moved away from the coupling region without having to hire an external crane, a jackup vessel, etc.

According to the invention, the method of moving a wind turbine gearbox along a bedplate of a wind turbine installation comprises steps of: providing an instance of the claimed apparatus; connecting each torque arm support to the bedplate, installing the first torque arm support about the LHS torque arm of the gearbox; installing the second torque arm support about the RHS torque arm of the gearbox; and actuating the displacement means to effect a displacement of the gearbox relative to the stationary torque arm supports.

Particularly advantageous embodiments and features of the invention are given by the dependent claims, as revealed in the following description. Features of different claim categories may be combined as appropriate to give further embodiments not described herein.

In the following, it may be assumed that the wind turbine rotor is tilted upward by a few degrees, to avoid tip-tower collisions. It follows that the entire drivetrain is installed at the same angle.

Without restricting the invention in any way, it may also be assumed that the wind turbine is equipped with a service crane for handling components inside the nacelle. Such a service crane - also referred to as "internal crane" or "nacelle crane" in the following - may be able to lift loads in the order of 1000 kg and can be permanently installed in the nacelle. Such a crane can be deployed to lift a load from ground level into the nacelle, e.g. through an access hatch in the nacelle floor.

In preparation for a maintenance procedure in the coupling region, the generator can be uncoupled from the gearbox to make room for the gearbox to be displaced towards the rear of the nacelle. The high-speed coupling interface can be removed with the aid of the nacelle crane, for example. The nacelle crane can also be used for tasks such as dismantling the torque arm fixation assemblies from about each gearbox torque arm, lifting components of the inventive apparatus into place, etc. After assembling the torque arm supports of the inventive apparatus, the drive shaft is uncoupled from the front end of the gearbox in a further preparatory step. After completion of all preparatory steps, the displacement means of the inventive apparatus can then be deployed to displace the gearbox in the downwind direction in order to expose the coupling region.

A torque arm support can be realised in any suitable manner. Preferably, the torque arm support is dimensioned so that it can be handled by the nacelle crane. Since there is generally only very little space between the drivetrain components and the nacelle walls, a one-piece torque arm support may be cumbersome to handle. Therefore, in a particularly preferred embodiment of the invention, a torque arm support can be assembled from multiple parts that can each be handled by the service crane.

In a particularly preferred embodiment of the invention, a torque arm support comprises a base assembly, a pair of upright structures, and a crosspiece. The base assembly comprises a base plate that is shaped to fit between the bedplate and the underside of a gearbox torque arm. Since the torque arm support should remain stationary while the gearbox is shifted, the base plate is constructed so that it can be attached to the bedplate. For example, the base plate can have a set of through-holes to receive similar fasteners (i.e. having the same diameter) that are used to secure the torque arm fixation assembly to the bedplate. A first upright structure or "front column" is adapted for connection to the front end of the base plate, and a second upright structure or "rear column" is adapted for connection to a rear end of the base plate. Each upright structure can be secured to the base plate by means of threaded fasteners, for example. To complete the torque arm support, a transverse element or crosspiece is placed onto the upper ends of the uprights and secured to these. The resulting assembly is essentially rectangular in shape, with the base plate, vertical uprights, and the crosspiece forming an open frame. The torque arm support is constructed so that it fits about a torque arm, with a relatively large space between the torque arm and the rear upright, to allow the gearbox to be shifted towards the rear of the bedplate. For example, the torque arm support can be constructed to allow the gearbox to be shifted by a distance in the order of 500 mm.

As explained above, the base assembly comprises a base plate that fits underneath the torque arm and which is secured to the bedplate. To support the gearbox during displacement, the base assembly further comprises a slider assembly for placement between the base plate and the underside of the torque arm. The slider assembly preferably comprises a low-friction plate or "sliding plate" along which the torque arm can slide with little resistance. To this end, the sliding plate must be brought into contact with the underside of the torque arm. In a particularly preferred embodiment of the invention therefore, the base assembly also comprises a means of raising the sliding plate to contact the underside of the torque arm. For example, this can be achieved by an intermediate structure arranged to support the sliding plate, and a means of raising the sliding plate (e.g**.** a flat hydraulic cylinder) to the level of the torque arm underside, thereby creating a gap between the sliding plate and the support structure. The base assembly further comprises a set of shims that can be pushed into the gap so that the sliding plate maintains contact with the torque arm underside. Preferably, the uprights abut the outer ends of the sliding plate to prevent it from moving when the gearbox is being displaced.

The torque arm supports can be assembled one after the other. For example, the LHS torque arm support can be assembled first if the LHS torque arm fixation assembly is easiest to remove. In a particularly preferred embodiment of the invention, the apparatus comprises a means of effecting a rotary displacement of the gearbox. For example, a flat hydraulic cylinder can be arranged between the torque arm and upper crosspiece of the LHS torque arm support, and actuated to force the LHS torque arm downwards, thereby effecting a slight rotational movement of the gearbox and displacing the RHS torque arm upwards, which will allow the RHS torque arm fixation assembly to be dismantled and the RHS torque arm support to be assembled.

Once both torque arm supports are in place and all other preparatory steps have been completed, the displacement means can be actuated to effect the desired displacement of the gearbox. The displacement means can be realised in a number of ways. For example, the displacement means can comprise an actuator than exerts pressure against the front end of the gearbox. The displacement means can comprise any suitable actuator that can effect a displacement of the gearbox relative to the torque arm supports, for example a motor-driven worm gear, a caterpillar drive, etc.

In a particularly preferred embodiment of the invention, the displacement means comprises, for each torque arm support, a hydraulic cylinder supported by the first upright structure and arranged to exert pressure against the torque arm in the downwind direction. As mentioned above, the aerodynamic rotor of the wind turbine may be tilted upward by a few degrees, so that the drivetrain and bedplate exhibit a slight downward slope from the front end of the nacelle towards the rear. To open up the coupling region, the gearbox is therefore pushed along the downward-sloping bedplate.

After completion of a maintenance procedure, the gearbox must be pushed back to its original position. To this end, the displacement means comprises, for each torque arm support, a hydraulic cylinder supported by the second upright structure and arranged to exert pressure against the torque arm in the upwind direction. The hydraulic cylinders supported by the second upright structures must push the gearbox back "uphill" and can be more powerful than the hydraulic cylinders supported by the first upright structures.

For each torque arm support, the upright structures can each support one hydraulic cylinder, i.e. each torque arm support comprises a pair of hydraulic cylinders. Of course, depending on the gearbox design, it may be preferable to equip each torque arm support with two or more pairs of hydraulic cylinders. Preferably, the hydraulic cylinders of a pair are collinear, so that during displacement of the gearbox towards the rear of the nacelle, a downwind hydraulic cylinder can serve to counteract the action of an upwind hydraulic cylinder, in order to achieve a controlled and steady displacement of the gearbox.

The dimensions of a gearbox and its torque arms can vary between different drivetrain designs. However, it is desirable to be able to deploy the inventive apparatus for various different drivetrain designs. Therefore, in a preferred embodiment of the invention, the displacement means comprises a set of stroke extenders, so that the stroke length of each hydraulic cylinder can be adjusted as appropriate.

As explained above, the coupling unit between gearbox and low-speed shaft allows the gearbox to be carried by the low-speed shaft in this type of drivetrain, i.e. the rear of the gearbox is not in contact with the bedplate. Since the coupling unit will be removed, the weight of the gearbox must be supported in some way. For example, an overhead lifting structure such as a traverse and a winch could be deployed to exert an upward pulling force from an eyebolt provided at the downwind end of the gearbox. However, installation of such a lifting structure could be time-consuming and expensive. Therefore, in a particularly preferred embodiment, the inventive apparatus also comprises a rear support assembly to support the rear end of the gearbox during a displacement procedure. In a further preparatory step, the rear support assembly can be mounted to the bedplate and can comprise various parts that can be manoeuvred into place underneath the gearbox using the nacelle crane. Preferably, the rear support is dimensioned to reach the underside of the gearbox, and is preferably equipped with a low-friction surface such as a slider plate to facilitate displacement of the gearbox.

In addition to the shim sets of the base assembly as mentioned above, the inventive apparatus can include various other shim sets to allow the torque arm supports and the rear support to be configured, in a preparatory step, according to the drivetrain shape and dimensions. For example, the inventive apparatus can comprise another set of shims for placement between the bedplate and a torque arm support, another set of shims for placement between a slider plate of the rear support assembly and the bedplate, etc.

The sliding surface of a torque arm support or the rear support can have a low-friction surface such as a PTFE-coated surface, a polished surface, etc. In a preferred embodiment of the invention, in a further preparatory step, a lubricant such as grease is applied liberally to the sliding surfaces to ensure a low-friction movement of the gearbox.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figures 1 - 3 show components of an exemplary wind turbine drivetrain;
Figures 4 - 13 illustrate the principle of the inventive apparatus and show stages of the inventive method;
Figure 14 shows a prior art approach.

In the diagrams, like numbers refer to like objects throughout. Objects in the diagrams are not necessarily drawn to scale.

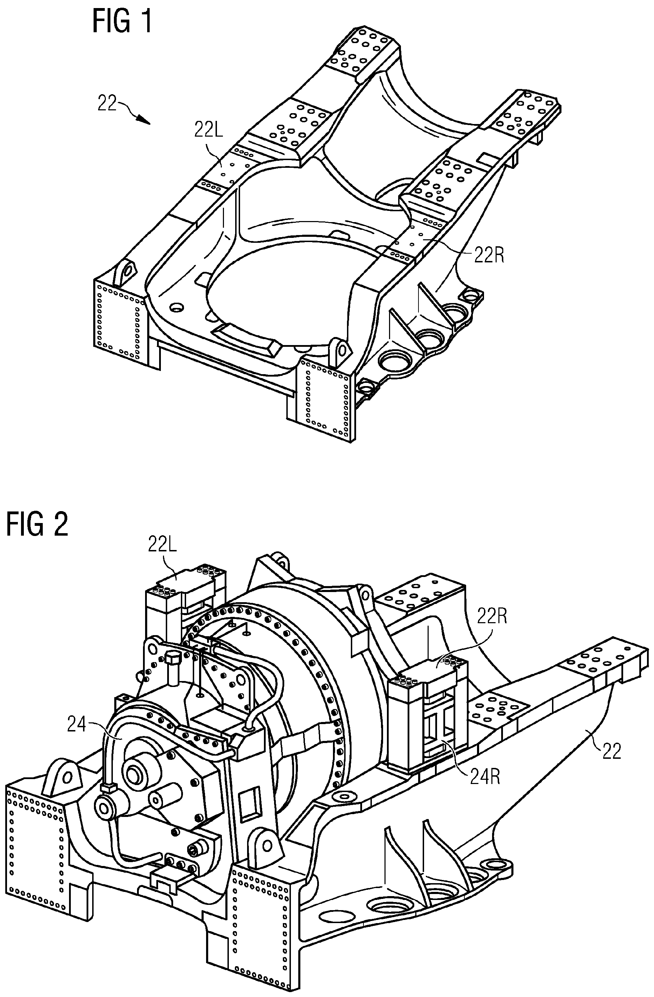

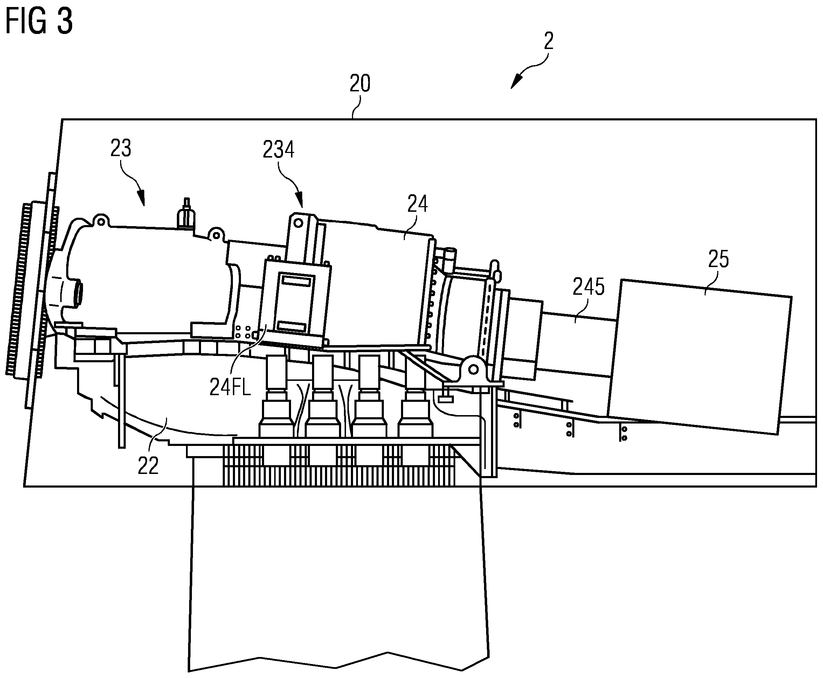

Figure 1 shows the bedplate 22 of the type of wind turbine discussed herein, and Figure 2 shows the gearbox 24 in place on the bedplate 22. The front end of the bedplate 22 is shaped to receive a main shaft assembly (a low-speed shaft and its housing, not shown). The main part of the bedplate 22 has a large circular opening that fits over the top of the tower, with further smaller openings to receive the yaw drive motors. Two surfaces 22L, 22R of the bedplate 22 are adapted to receive torque arm fixation assemblies 24FL, 24FR assembled about the gearbox torque arms 24L, 24R, in order to support the gearbox 24 during operation of the wind turbine. In Figure 2, the RHS torque arm fixation assembly 24FR can be seen in place about the RHS torque arm 24R of the gearbox 24. Figure 3 is a side view of such a drivetrain, indicating a low-speed coupling 234 between the low-speed unit 23 and gearbox 24. Here, the low-speed coupling 234 is a double-flange configuration, which may need to be opened at some stage during the service life of the wind turbine in order to perform maintenance in the interior of the coupling 234. At the rear of the gearbox 24, a high-speed coupling 245 is used to connect the gearbox 24 to the generator 25. The diagram also indicates the bedplate 22 and the outline of the nacelle 20. Housings of the low-speed unit 23 and the generator 25 are mounted to the bedplate 22.

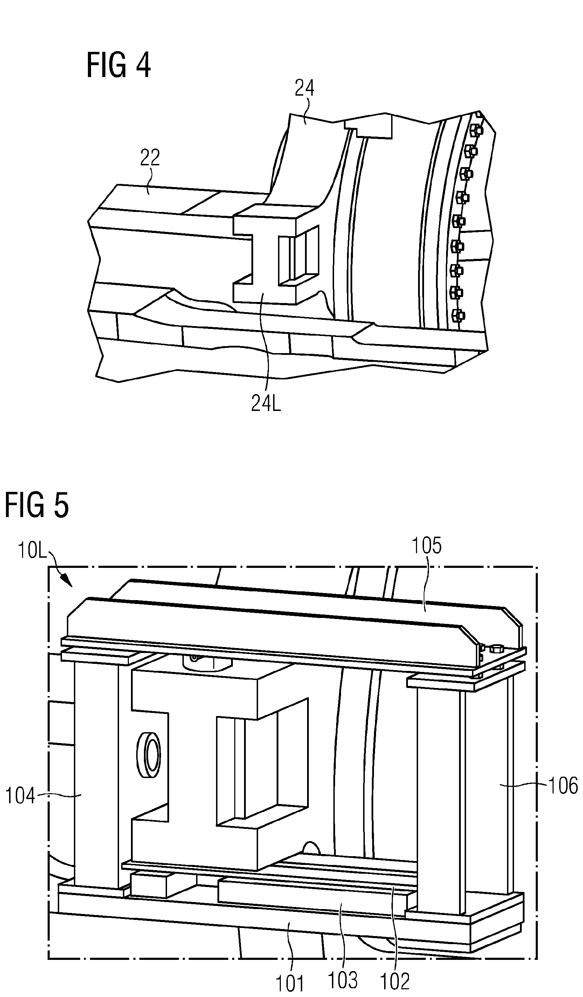

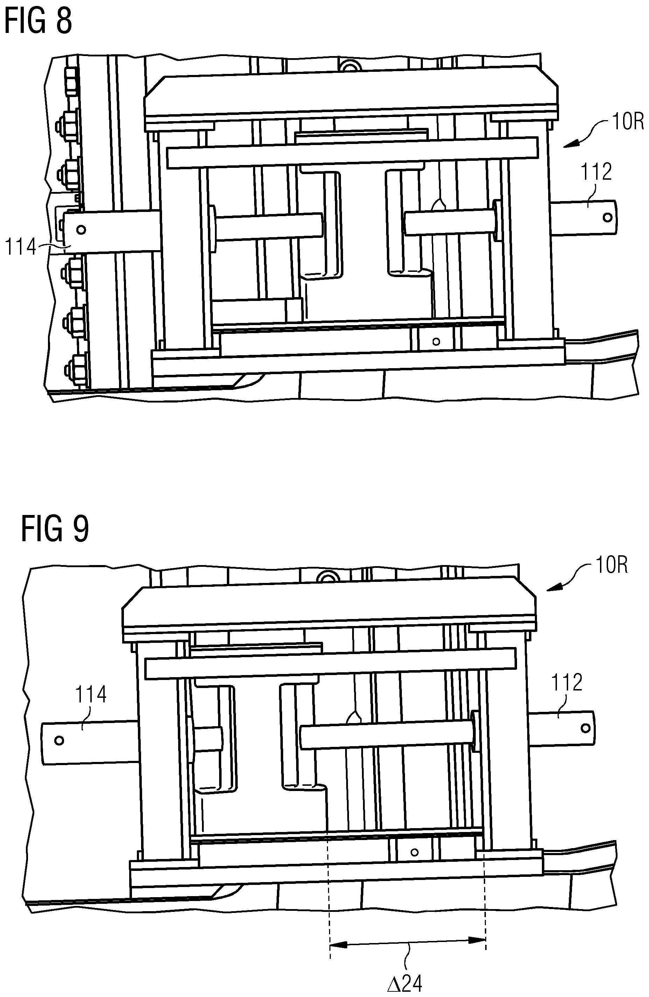

Figures 4 - 13 illustrate the principle of the inventive apparatus 1 and stages of the inventive method. Since there are many different wind turbine drivetrain configurations, the apparatus 1 described in the following shall be regarded as an exemplary embodiment.

In Figure 4, the torque arm fixation assembly of the LHS torque arm 24L has been dismantled and removed. In Figure 5, the LHS torque arm support 10L is assembled about the torque arm 24L. The torque arm support 10L comprises a base assembly 101, two uprights 104, 106 secured to the base assembly 101, and a crosspiece 105 connected to the two uprights 104, 106. The components of the torque arm support 10L can each weigh in the order of 80 kg, and can be handled with the aid of the nacelle crane. To this end, each component can be equipped with an eyebolt for attaching to a lifting cable.

In a first step, the base plate 101 of the LHS torque arm support 10L is connected to the bedplate 22, for example using threaded bolts inserted into the threaded bores that are otherwise used to secure the LHS torque arm fixation assembly. A support plate 103 and slider plate 102 are then positioned on the base plate 101. The uprights 104, 106 are then attached to the base plate 101. The uprights 104, 106 abut the slider plate 102 and its support 103. In a subsequent step, the transverse 105 or crosspiece is secured to the uprights 104, 106 to complete the rectangular frame structure of the torque arm support 10L.

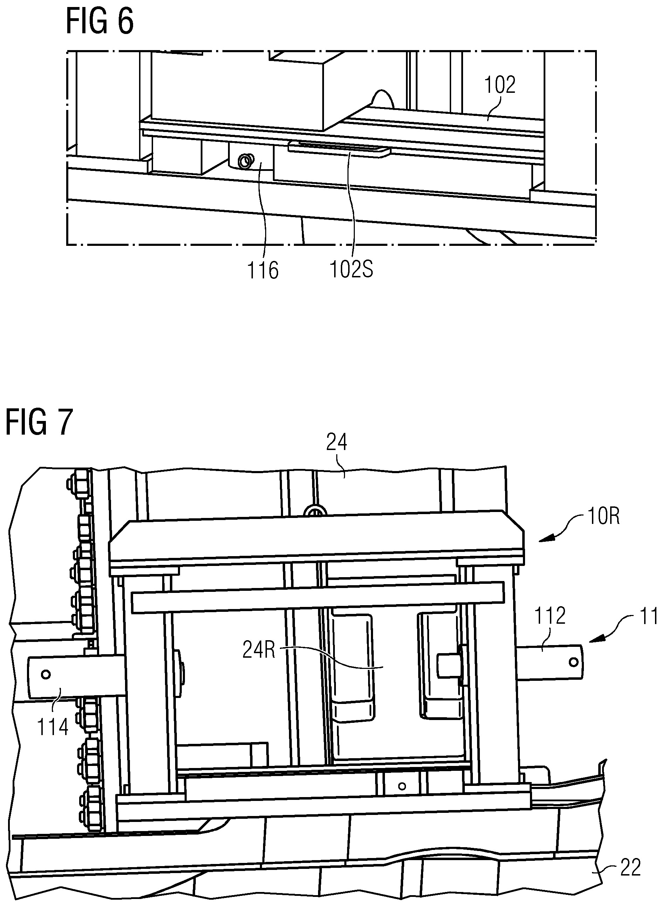

Figure 6 shows further details of the base assembly of the torque arm support. Here, the base assembly comprises the base plate 101, a support 103, a slider plate 102, and a flat hydraulic cylinder 116 that can be actuated to raise the slider plate 102. One or more shims 102S can then be pushed into the gap between support 103 and slider plate 102, so that the torque arm 24L rests on the slider plate 102. The same procedure is carried out for the RHS torque arm support 10R.

A hydraulic arrangement 11 is then assembled and actuated as illustrated in Figures 7 - 9, which show plan views of the RHS torque arm support 10R. The displacement means 11 comprises a hydraulic cylinder 112 supported by the first upright structure 104 and arranged to exert pressure against the torque arm 24R in the downwind direction, and a hydraulic cylinder 114 supported by the second upright structure 106 and arranged to exert pressure against the torque arm 24R in the upwind direction. These drawings show the slight upward slope of the bedplate 22 and drivetrain towards the front of the drivetrain. To open up the coupling region, the upwind hydraulic cylinders 112 of the torque arm supports 10L, 10R are actuated to push the gearbox 24 along the downward-sloping bedplate 22. After completion of a maintenance procedure in the coupling region, the downwind hydraulic cylinders 114 of the torque arm supports 10L, 10R, are actuated to push the gearbox 24 back "uphill", so that the gearbox 24 can be coupled to the low-speed unit 23 again.

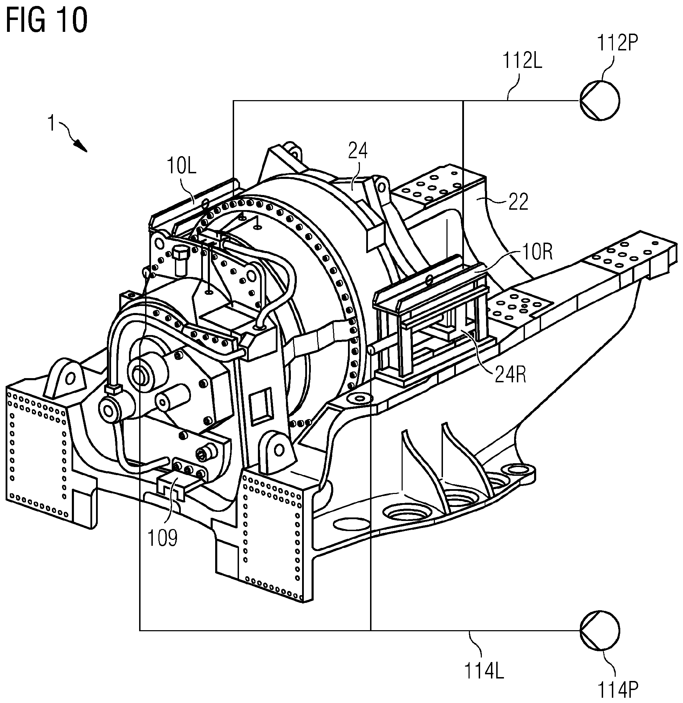

Figure 10 shows a perspective view of the assembled apparatus 1, looking onto the RHS of the gearbox 24. The diagram shows the RHS torque arm support 10R in place about the RHS torque arm 24R, and indicates various components of the hydraulic system 11. The cylinders 112 of the front uprights 104 can be connected to an electric pump 112P by fluid lines 112L as shown; similarly, the cylinders 114 of the rear uprights 106 can be connected to an electric pump 114P by fluid lines 114L. Suitable valves arranged in such fluid lines can be configured to regulate the fluid flow direction as will be known to the skilled person. The cylinders 112 supported by the front uprights can be connected to a manual pump 112P, since these only need to push the gearbox "downhill". The cylinders 114 supported by the rear uprights 106 can be connected to an electric pump 114P, since these require more power in order to push the gearbox back "uphill".

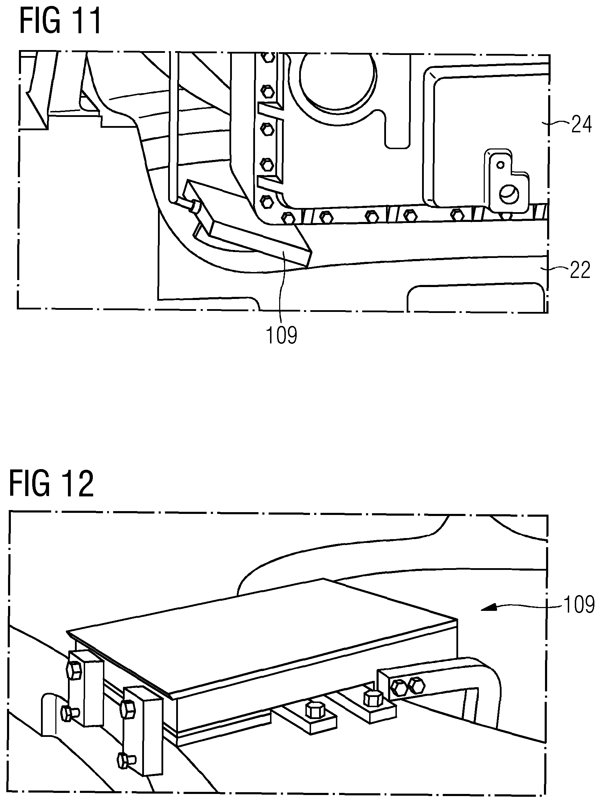

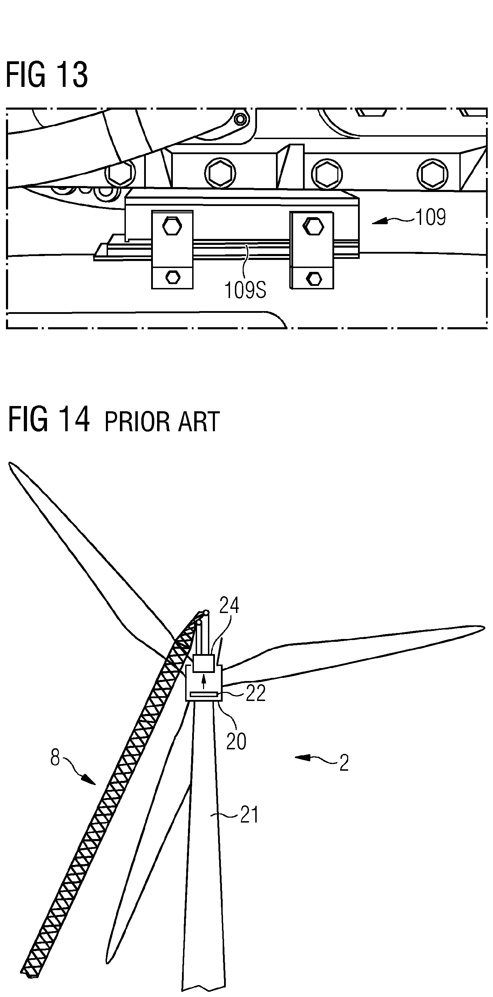

The diagram also shows a rear support assembly 109 in place under the rear of the gearbox 24. During a displacement procedure, the rear underside of the gearbox 24 can slide along a low-friction surface of the rear support 109. Figure 11 shows a stage in assembly of the rear support 109. Here, the nacelle crane (not shown) is being deployed to manoeuvre a rear support component into the gap between gearbox 24 and bedplate 22. Figure 12 shows further details of this exemplary embodiment of the rear support 109, for clarity the gearbox is not shown here. Figure 13 shows various shims 109S in place underneath the rear support 109, in order to bring its upper surface sufficiently close to the gearbox 24. As explained above, grease can be applied to this sliding surface also in order to facilitate displacement of the gearbox 24.

Figure 14 shows a prior art approach to opening up the coupling region of such a drivetrain. Here, an external crane 8 (only the boom is shown) is being deployed to lift the uncoupled gearbox 24 out of the nacelle 20 so that a maintenance procedure can be performed in the exposed coupling. As explained above, the costs of hiring such a crane 8 and - in the case of an offshore wind turbine 2 as shown here, the additional cost of hiring a jackup vessel - can be prohibitively expensive and add significantly to the overall cost of energy.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. Any pronoun denoting a specific gender shall be understood to apply equally to any gender identity.

## Claims

1. An apparatus (1) for moving a wind turbine gearbox (24) along a bedplate (22) of a wind turbine installation (2), comprising
- a pair of torque arm supports (10L, 10R), wherein each torque arm support (10L, 10R) is adapted for connection to the bedplate (22) and for installation about a torque arm (24L, 24R) of the gearbox (24); and
- a means (11) of effecting a displacement (Δ24) of the gearbox (24) relative to the torque arm supports (10L, 10R).

2. An apparatus according to the preceding claim, wherein each torque arm support (10L, 10R) comprises
- a base assembly (101) shaped to fit between the bedplate (22) and a gearbox torque arm (24L, 24R);
- a first upright structure (104) adapted for connection to a front end of the base assembly (101);
- a second upright structure (106) adapted for connection to a rear end of the base assembly (101); and
- a crosspiece (105) adapted for connection to the upper ends of the upright structures (104, 106).

3. An apparatus according to any of the preceding claims, wherein the displacement means (11) comprises, for each torque arm support (10L, 10R), a hydraulic cylinder (112) supported by the first upright structure (104) and arranged to exert pressure against the torque arm (24L, 24R) in the downwind direction.

4. An apparatus according to any of the preceding claims, wherein the displacement means (11) comprises, for each torque arm support (10L, 10R), a hydraulic cylinder (114) supported by the second upright structure (106) and arranged to exert pressure against the torque arm (24L, 24R) in the upwind direction.

5. An apparatus according to any of the preceding claims, wherein each torque arm support (10L, 10R) comprises a slider assembly (102, 103) to receive a lower surface (24S) of the torque arm (24L, 24R).

6. An apparatus according to the preceding claim, wherein a slider assembly comprises a low-friction plate (102) and a vertical displacement means (116, 102S) for raising the low-friction plate (102) to contact the lower surface (24S) of the torque arm (24L, 24R).

7. An apparatus according to the preceding claim, wherein the vertical displacement means comprises a flat hydraulic cylinder (116).

8. An apparatus according to any of the preceding claims, comprising a rear support assembly (109) adapted to support the rear end of the gearbox (24) during a displacement procedure.

9. An apparatus according to any of the preceding claims, wherein the rear support assembly (109) comprises a sliding surface to facilitate displacement of the gearbox (24).

10. An apparatus according to any of the preceding claims, comprising shims (102S, 109S) for configuring a torque arm support (10L, 10R) and/or the rear support assembly (109).

11. A method of moving a wind turbine gearbox (24) along a bedplate (22) of a wind turbine installation (2), which method comprises
- providing an apparatus (1) according to any of claims 1 to 10;
- installing a first torque arm support (10L, 10R) between the bedplate (22) and a first torque arm (24L, 24R) of the gearbox (24);
- installing a second torque arm support (10L, 10R) between the bedplate (22) and a second torque arm (24L, 24R) of the gearbox (24);
- actuating the displacement means (11) to effect a displacement (Δ24) of the gearbox (24) along the bedplate (22).

12. A method according to the preceding method claim, wherein the torque arm supports (10L, 10R) are installed with the aid of a nacelle service crane (29).

13. A method according to any of the preceding method claims, wherein the displacement means (11) is actuated to effect a displacement (Δ24) of the gearbox (24) in the downwind direction by an amount sufficient to facilitate a maintenance procedure in a coupling region (234) at the front end of the gearbox (24).

14. A method according to any of the preceding method claims, comprising a step of applying grease on a sliding surface (102) of the apparatus (1).

15. A method according to any of the preceding method claims, wherein steps of
- dismantling a torque arm fixation assembly (24FL, 24FR) from about each gearbox torque arm (24L, 24R); and/or
- removing a high-speed coupling interface (245) from between gearbox (24) and generator (25); and/or
- uncoupling a low-speed unit (23) from the front end of the gearbox (24)
are performed in a preparatory stage prior to actuation of the displacement means (11).
